# EUROPÄISCHE PATENTANMELDUNG

(11) **EP 2 172 630 A2**
(43) Veröffentlichungstag der Anmeldung: **07.04.2010**
(21) Anmeldenummer: 09011961.1
(22) Anmeldetag: 19.09.2009
(51) Int. Cl.: F01N 3/36, B60K 15/00, B67D 7/02

(54) **Befüllstutzen für einen Behälter**

(30) Priorität: 02.10.2008 DE 202008013134 U; 13.07.2009 DE 202009009647 U
(71) Anmelder: Apel, Helga, 59394 Nordkirchen (DE)
(72) Erfinder: Apel, Helga, 59394 Nordkirchen (DE)
(74) Vertreter: Wenzel & Kalkoff

(57) **Zusammenfassung**

Es handelt sich um eine Vorrichtung zum Befüllen eines Behältnisses (1) mit einer Flüssigkeit, insbesondere Harnstoff-Lösung (6), bei der wenigstens ein Tankstutzen (2) über einer Tanköffnung (33) des Behältnisses angeordnet ist. Mi dem Tankstutzen (2) soll ein Einfüllstutzen (3) zu verbinden sein; am Einfüllstutzen (3) sind wenigstens ein Leitungsschlauch und ein wenigstens ein Sensorelement (4, 15, 30) angeordnet.

## Beschreibung

Die Erfindung betrifft eine Vorrichtung zum Befüllen eines Behältnisses mit einer Flüssigkeit, insbesondere Harnstoff-Lösung, bei dem wenigstens ein Tankstutzen über einer Tanköffnung angeordnet ist.

Eine Vorrichtung der eingangs genannten Art ist aus der DE 195 35 413 C1 bekannt. Hierbei wird ein rohrartiger Stutzen zum Anschließen an eine Öffnung eines Behälters mit einem abgestuften Ringkörper versehen. Versetzt um die Wandstärke des Körpers gegenüber dem Körperinnendurchmesser ist ein umlaufender Ringkörper mit einem Vorsprung angeformt. Durch Erhitzen wird der Ringkörper über eine Zwischenschicht mit dem Behälter verbunden. Auf eine Halterippe wird ein Schlauch aufgesteckt, über den der Tank zu befüllen ist.

Aus der DE 101 64 408 A1 ist ein flüssigkeits- oder dampfführendes System mit einer Fügezone aus einem koextrudierten Mehrschichtverbund bekannt, das folgende Komponenten enthält:
I. ein Anschlusselement,
II. einen koextrudierten Mehrschichtverbund,
III. einen Hohlkörper,
wobei die Komponenten I, II, III stoffschlüssig miteinander verbunden sind. Auch hier wird auf eine Halterippe ein Schlauch aufgesteckt, über den der Tank zu befüllen ist.

Zum Befüllen eines Tanks selbst wird eine Tankpistole eingesetzt, wie sie aus der DE 20 2004 001 186 U1 bekannt ist. Diese bekannte Tankpistole weist eine optoelektronische Zustandsanzeige auf.

Aus der US 2008 003 5239 A1 ist eine weitere Tankpistole bekannt. Hierbei enthält die Spitze der Tankpistole ein Düsenzusatzgerät, das ein Abtropfen von Kraftstoff bzw. Undichtigkeiten verhindern soll. Bewirkt wird das durch ein Ventil, das sich zwischen einer Schließ- und einer Öffnungsposition bewegt.

Die insbesondere in Behältnisse an Fahrzeugen einzufüllenden Flüssigkeiten, wie Benzin, Diesel und neuerdings Harnstoff-Lösung erfordern eine besondere Ausbildung der Behältnisse und der mit ihnen zu verbindenden Befüllungseinheiten.

Es stellt sich die Aufgabe, eine Vorrichtung zum Befüllen eines Behältnisses mit einer Flüssigkeit, insbesondere Harnstoff-Lösung, derart weiter zu entwickeln, dass die Befüllung auf die Flüssigkeit einstellbar ist und der Einfüllvorgang sicherer ist.

Erfindungsgemäß wird diese Aufgabe durch die Merkmale des Anspruchs 1 oder 2 oder 6 gelöst.

Mit anderen Worten: Es wird zum Befüllen des Behältnisses mit einer Flüssigkeit, insbesondere Harnstoff-Lösung, ein über einer Tanköffnung angeordneter Tankstutzen mit einem Einfüllstutzen verbunden.

### Der Einfüllstutzen kann unterschiedlich komfortabel ausgebildet werden:

In seiner Grundausführung enthält der Einfüllstutzen wenigstens einen Leitungsschlauch. Diese Ausstattung kann durch wenigstens einen Sensor ergänzt werden.

In einer weiteren Ausführung können am Einfüllstutzen wenigstens ein Leitungsschlauch, ein Füllstandssensor und ein Drucksensor angeordnet sein.

Als weiteres Sensorelement kann ein Durchflusssensor vorgesehen werden.

Diese Elemente können in unterschiedlichster Art und Weise miteinander kombiniert werden.

In seiner vollkommensten Ausführung sind am Einfüllstutzen wenigstens ein Leitungsanschlusselement, ein Füllstandssensor und ein Drucksensor angeordnet,
wobei der Füllstandssensor, der Drucksensor, ein Durchflusssensor und ein Zuflussregelungselement mit einer Rechnereinheit verbunden und in folgenden Schritten anzusteuern sind:
A) Erfassen der vom Füllstandssensor gemessenen Füllstandshöhe;
B) Erfassen der vom Drucksensor gemessenen Drücke;
C) Erfassen der vom Durchflussmesser gemessenen Durchflussmenge an Flüssigkeit;
D) Ansteuern des Zuflussregelungselements derart, dass die zugeführte Flüssigkeit einen Innendruck und eine Füllstandshöhe innerhalb voreingestellter Grenzen nicht überschreitet.

Diese Konfigurationen können durch ein Rückflussregelelement ergänzt werden. Als Regelelement kann ein geregelter Motor mit Pumpe oder ein Umschaltventil zum Einsatz kommen.

Die mit der Erfindung erzielbaren Vorteile bestehen insbesondere darin, dass die herkömmliche Tankpistole durch einen festen Verbund zwischen Tankstutzen und Einfüllstutzen ersetzt wird. Dadurch wird ein sorgsamer Umgang vor allem mit der aggressiven Harnstoff-Lösung gesichert. Der Durchflussmesser gibt ständig Aufschluss über die Strömungsgeschwindigkeit und Durchflussvolumen der Flüssigkeit, der Höhenstandssensor gibt Aufschluss über den aktuellen Flüssigkeitsstand, der Drucksensor stellt ständig den Innendruck im Tank fest. Alle Elemente sorgen insbesondere dafür, dass der Befüllvorgang und der Befülldruck zu keiner Verformung des Behältnisses und damit zur Beschädigung empfindlicher Sensoreinheiten und Heizung im Behälterinneren führen.

In einem Schritt E) kann mit dem Zuflussregelungselement eine vollständige Füllung des Behältnisses so bemessen werden, dass eine maximale Füllstandshöhe abzüglich einer Teilhöhe nicht überschritten wird. Das Behältnis wird also nur höchstens nach der Beziehung hmax - Δh befüllt. Damit wird eine Belastung der Behälterwände verhindert, die durch eine Überfüllung, bei einer Volumenausdehnung durch Erwärmung sowie einer Überschreitung eines maximalen Drucks auftreten können. Es kann ein spezieller Höhenstandsensor eingesetzt werden, der nur die maximale Füllstandshöhe hmax erfasst.

Mit der Rechnereinheit kann eine Verriegelungseinheit verbunden werden.
In einem Schritt F) kann dann die Verriegelungseinheit derart angesteuert werden, dass bei Beendigung des Flüssigkeitsflusses durch das Zuflussregelelement der Einfüllstutzen vom Tankstutzen erst nach einer Abtropfzeit gelöst werden kann. Hierdurch wird gewährleistet, dass eine tropffreie Trennung von Tank- und Einfüllstutzen vorgenommen wird.

Die Verriegelungseinheit kann als mechanische Sperreinheit und/oder akustisch und/oder optische Warneinheit ausgebildet werden.

Der Füllstandssensor kann als Lichtleitersensor, PTC-Sensor, NTC-Sensor (Sensoren mit positivem bzw. negativem Temperaturkoeffizienten), kapazitiver Sensor, Hall-Sensor, induktiver Sensor, potentiometrischer Sensor, mechanischer Schalter oder dgl. ausgebildet sein. Der PTC - Sensor kann auch ein beheizter PTC -Sensor sein.

Der festgelegte Innendruck kann ca. ± 100 mbar gegenüber dem atmosphärischen Normaldruck betragen. Durch ein Abpumpen von ca. 1 ltr. Flüssigkeit kann die Teilhöhe eingestellt werden. Beide Maßnahmen sorgen dafür, dass das Behältnis nicht überlastet und insbesondere Spezialelektronik und Heizung nicht beschädigt werden.

Damit die gefährliche Flüssigkeiten, hier insbesondere Harnstoff-Lösung, nicht zu Verätzungen und dgl. führen, sollte die Abtropfzeit ca. 30 bis 180 sec. betragen.
Die Abtropfzeit kann durch ein Potentiometer, einem elektrischen Kontakt, eine Zeitschaltung oder dgl. ermittelt und eingehalten werden.

Der Füllstandssensor kann als Lichtleitersensor ausgebildet werden. Der als Lichtleitersensor ausgebildete Füllstandssensor kann ein Reflexionssensor sein.

Der Füllstandssensor kann ein aus einem in das Behältnis ragenden Fühlerstab und einem sich daran anschließenden, aus dem Einfüllstutzen zeigendes Anschlussteil bestehen.

Für den Drucksensor bestehen insbesondere zwei Realisierungsmöglichkeiten. Zum einen kann der Drucksensor ein digitaler Drucksensor mit einem hochauflösenden Modus und zum anderen ein herkömmlicher analoger Drucksensor sein.

Der Tankstutzen kann einen Tankstutzenhohlzylinder aufweisen, der in einen Kupplungshohlzylinder übergeht. Am Tankstutzenhohlzylinder selbst kann ein Stutzenbefestigungselement angeordnet sein. Der Kupplungshohlzylinder wiederum kann zum Tankstutzenhohlzylinder hin ein umlaufendes Kupplungsabschlusselement aufweisen.

Die Sicherheit der Verbindung beider Stutzen hat höchste Priorität. Aus diesem Grund können weiterhin nachstehende Maßnahmen zur Vervollkommnung der in den selbstständigen Ansprüchen angebenden mechanischen Merkmale zum Einsatz kommen.

Am Kupplungshohlzylinder können ein Rippenelement und ein Einfüllstutzenabschlussringelement angeordnet sein.

Der Einfüllstutzen kann einen Einfüllstutzenaufnahmehohlzylinder mit wenigstens einem abschließenden Stutzenabschlusselement aufweisen.

Am Einfüllstutzenaufnahmehohlzylinder des Einfüllstutzens kann dem abschließenden Stutzenabschlusselement gegenüber liegend wenigstens ein Verriegelungselement angeordnet sein.

Am Einfüllstutzenaufnahmehohlzylinder des Einfüllstutzens kann dem abschließenden Stutzenabschlusselement gegenüberliegend wenigstens ein Klemmschlitz eingebracht sein.

In den Einfüllstutzenaufnahmehohlzylinder des Einfüllstutzens kann eine Ringausnehmung eingebracht werden.

In die Ringausnehmung kann ein Ringdichtungselement eingelegt werden.

Der Leitungsschlauch kann in den Tank bzw. des Behältnis wenigstens teilweise geführt werden.

Der Leitungsschlauch kann einen Füll - und einen Entlüftungsschlauch aufweisen.

Es kann ein Kammerelement vorgesehen werden, das eine Füll- und eine Entlüftungskammer aufweisen kann.

Der Füll- und der Entlüftungsschlauch lassen sich als Rohre ausbilden. Die beiden Rohre können durch ein Adapterstück verlängert werden.

Es kann eine rohrförmige Füllkammer bzw. ein entsprechend geformter Schlauch vorgesehen werden, die sternförmig geformte Stützrippen für die Abluftkammer bzw. den Abluftschlauch aufweisen können. Die rohrförmige Füllkammer kann durch ein weiteres Adapterstück zu verlängern werden.

Mit dem Durchflusssensor kann ein Einbruch von Flüssigkeit in den Entlüftungsschlauch bzw. die Entlüftungskammer erfasst werden.

Mit dem vom Durchflusssensor erfassten Flüssigkeitseinbruch kann ein Signal an die Rechnereinheit so weitergegeben werden, dass das Zuflussregelelement eine Notfunktion auslösen kann.

Diese Notfunktion kann ein Ausschalten und/oder eine Zurückpumpfunktion sein.

Der Tankstutzen kann aus Kunststoff geformt sein. Welcher Kunststoff zum Einsatz kommt, hängt mit von dem Kunststoff ab, aus dem der mehrschichtige Tank geformt ist. Der Einfüllstutzen und das Kammerelement mit Füll - und Entlüftungskammer können aus Kunststoff oder einem harnstofflösungsresistenten Metall hergestellt werden.

Am Kammerelement kann eine Multifunktions- und/oder Zustandsanzeige angeordnet sein.
Darüber hinaus kann am Kammerelement ein Notausschaltelement angeordnet sein.

Die Erfindung ist in der Zeichnung dargestellt und wird im Folgenden näher beschrieben.

Es zeigen:
- Fig.1: ein Spezialtank mit einer Befüllvorrichtung zum Befüllen mit Harnstoff-Lösung in einer schematischen, prinzipiellen Gesamtdarstellung,
- Fig. 2: eine Schaltungsanordnung für eine Befüllvorrichtung gemäß Fig. 1 als schematisches Blockschaltbild,
- Fig. 3: einen mit Sensoren versehenen Einfüllstutzen einer Befüllvorrichtung gemäß Fig. 1 in einer schematischen perspektivischen Darstellung,
- Fig. 4: einen Einfüllstutzen und einen Drucksensor für eine Befüllvorrichtung gemäß Fig. 1 in einer auseinander gezogenen, schematischen perspektivischen Darstellung,
- Fig. 5: einen Einfüllstutzen und einen Drucksensor für eine Befüllvorrichtung gemäß Fig. 1 in einer schematischen, teilweise geschnittenen perspektivischen Darstellung,
- Fig. 6: einen Einfüllstutzen einer Befüllvorrichtung gemäß Fig. 1 in einer schematischen perspektivischen Darstellung,
- Fig. 7, 8 und 9: einen in einen Tankstutzen eingesetzten Einfüllstutzen einer Befüllvorrichtung gemäß Fig. 1 in einer schematischen, geschnittenen perspektivischen Darstellung,
- Fig. 10: einen in einen Tankstutzen eingesetzte weitere Ausführungsform eines Einfüllstutzens einer Befüllvorrichtung gemäß Fig. 1 in einer schematischen geschnittenen perspektivischen Darstellung,
- Fig. 11: eine weitere Ausführungsform eines Einfüllstutzens gemäß Fig. 10 in einer schematischen, geschnittenen perspektivischen Darstellung,
- Fig. 12: einen Drucksensor für eine Befüllvorrichtung gemäß Fig. 1 in einer schematischen perspektivischen Darstellung,
- Fig. 13 und 14: einen Füllstandssensor für eine Befüllvorrichtung gemäß Fig. 1 in einer schematischen perspektivischen Darstellung,
- Fig. 15: ein Kammerelement mit Halteelement und Gehäuseelement einer Befüllvorrichtung gemäß Fig. 1 in einer schematischen perspektivischen Darstellung und
- Fig. 16: ein geöffnetes Kammerelement gemäß Fig. 15 in einer schematischen perspektivischen Darstellung.

Zur Einhaltung der künftigen hohen Abgasnorm werden Katalysatoren mit einem SCRi -System ausgerüstet. SCRi kombiniert den Katalysator mit selektiver katalytischer Reduktion (SCRi) - bei dem Harnstoff-Lösung eingespritzt wird - mit einem Oxidationskatalysator, der einen Partikelfilter aufweist. Alle Monolithen des Katalysators sind aus Metallfolien bzw. aus Metallvlies ausgelegt. Der Partikelfilter, als Nebenstrom-Tiefbettfilter ausgelegt, garantiert eine optimale Durchmischung des von ihm eingedüsten Harnstoff-Lösung-Wassergemischs mit dem Abgas und erzeugt einen geringeren Abgasdruck, was dem Kraftstoffverbrauch zugute kommt. Der Oxidationskatalysator beseitigt vorrangig Kohlenwasserstoffe und Kohlenmonoxid. Der Oxidationskatalysator wird daneben dazu genutzt, um aus dem Abgasstrom möglichst viel NO₂, also Stickstoffoxid, zu erzeugen, das für eine kontinuierliche Regeneration des Partikelfilters sorgt. Dort haben sich die Rußpartikel an den feinen Metalldrähten des Vlieses angelagert, die von den Schaufeln der strukturierten Folie mit dem Abgas dort hineingeleitet wurden.

Insgesamt werden beim SCRi-Verfahren etwa 60% bis 90% der Feinpartikel eliminiert.

Die eingespritzte Harnstoff-Lösung wird zu Ammoniak umgewandelt. Mit dem Ammoniak werden im folgenden SCR-Katalysator die Stickoxide in Stickstoff und Wasserdampf zerlegt. (Auszug aus "Harnstoff-Lösung optimiert den Kat";(Interview mit Wolfgang Maus, VDI nachrichten, 22. August 2008, Nr. 34, S. 9)

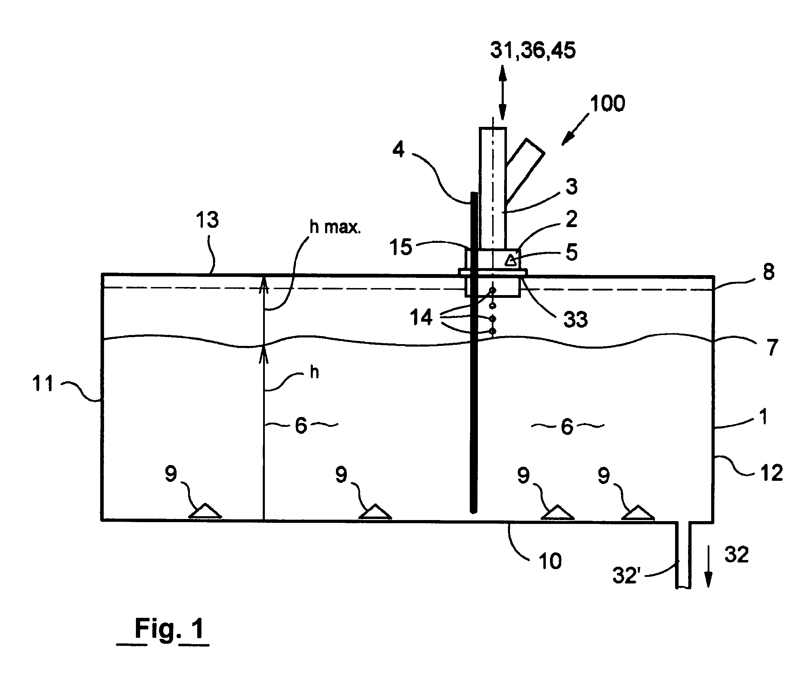

Für das SCRi-System wird in künftigen Fahrzeugen ein weiteres Behältnis als Tank 1 eingebaut, wie er in Fig. 1 dargestellt ist. Der Tank 1 wird durch Tankseitenwände 11, 12, einen Tankboden 10 und eine Tankdecke 13 begrenzt. Für eine Weiterleitung zum Katalysator 32 ist am Tankboden 10 eine Katalysatorleitung 32' angebracht. Auf dem Tankboden sind hochempfindliche Sensoreinheiten 9 und eine Heizung installiert.

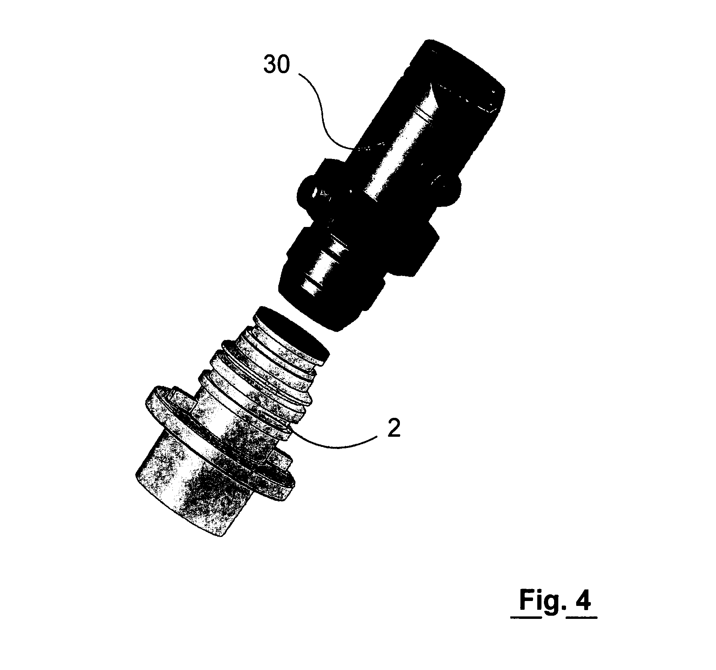

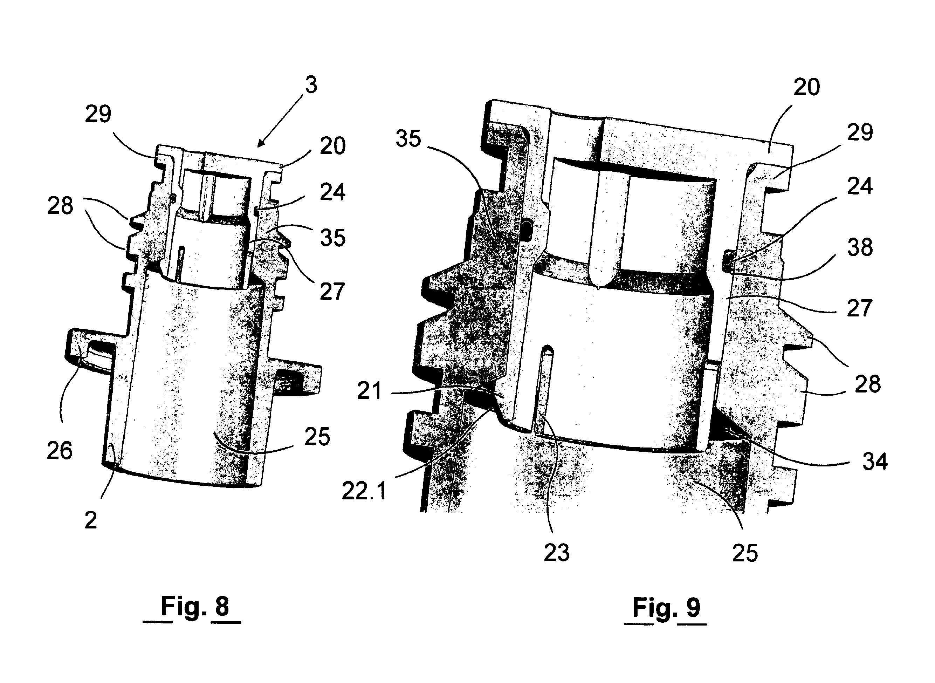

In die Tankdecke 13 ist eine Tanköffnung 33 eingebracht. Über dieser Öffnung 33 wird ein Tankstutzen 2 gemäß Fig. 4, 5, 7, 8, 9, 10 angeschweißt. Der Tankstutzen 2 hat einen Tankstutzenzylinder 25 (vgl. insbesondere Fig. 8), der in einen Kupplungshohlzylinder 35 übergeht. Im Übergangsbereich befindet sich ein Kupplungsabschlusselement 34, das als geneigte Schrägfläche ausgebildet ist. Unterhalb des Zylinders 36 ist am Tankstutzenzylinder 25 ein Stutzenbefestigungsringelement 26 angebracht. Am Kupplungshohlzylinder 35 sind Gewindeelemente 28 angebracht. Ein Einfüllabschlussringelement 29 vollendet den Kupplungshohlzylinder 35.
Mit dem Stutzenringelement 26 wird der Tankstutzen 2 am Tank 2 befestigt. Der Innendurchmesser der Tanköffnung 33 ist größer als der Außendurchmesser des Kupplungshohlzylinders 25 ausgebildet. Dadurch, dass der Kupplungshohlzylinder 25 ab Unterkante Stutzenringelement 26 länger als die Dicke der Tankdecke 13 ist, ragt der Zylinder 26 auch noch in den Tank 2 hinein. Beide Maßnahmen schränken einen Kontakt der Harnstoff-Lösung 6 mit der Schweißverbindung zwischen Stutzen 2 und Tank 1 ein und verhindern damit wirksam eine Ablösung des Tankstutzens.

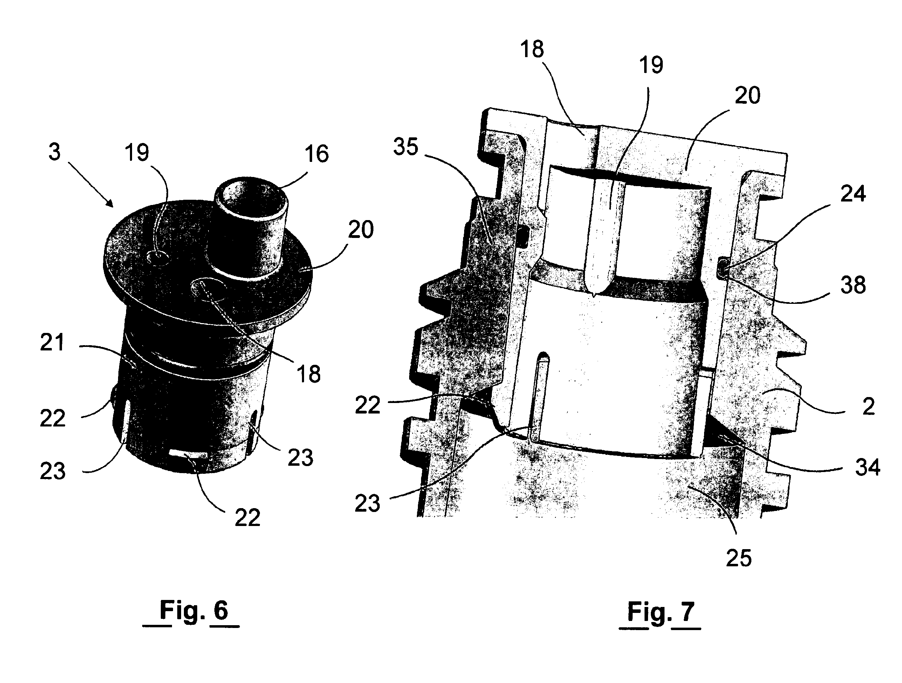

Wie die Fig. 6, 7, 8, 9 zeigen, wird in den Tankstutzen 2 ein Einfüllstutzen 3 eingesetzt. Der Einfüllstutzen 3 weist (vgl. insbesondere Fig. 6 und 7) einen Einfüllstutzenhohlzylinder 21 auf, der mit einem Stutzendeckelelement 20 abgeschlossen wird. Am freien Ende sind an den Einfüllstutzenhohlzylinder 21 Verriegelungselemente 22 mit einer Verriegelungsschräge 22.1 angebracht und Klemmschlitze 23 eingebracht. Äußerlich ist in den Einfüllstutzenhohlzylinder 21 eine umlaufende Ringausnehmung 38 eingebracht, in die ein Ringdichtungselement 24 eingelegt ist.

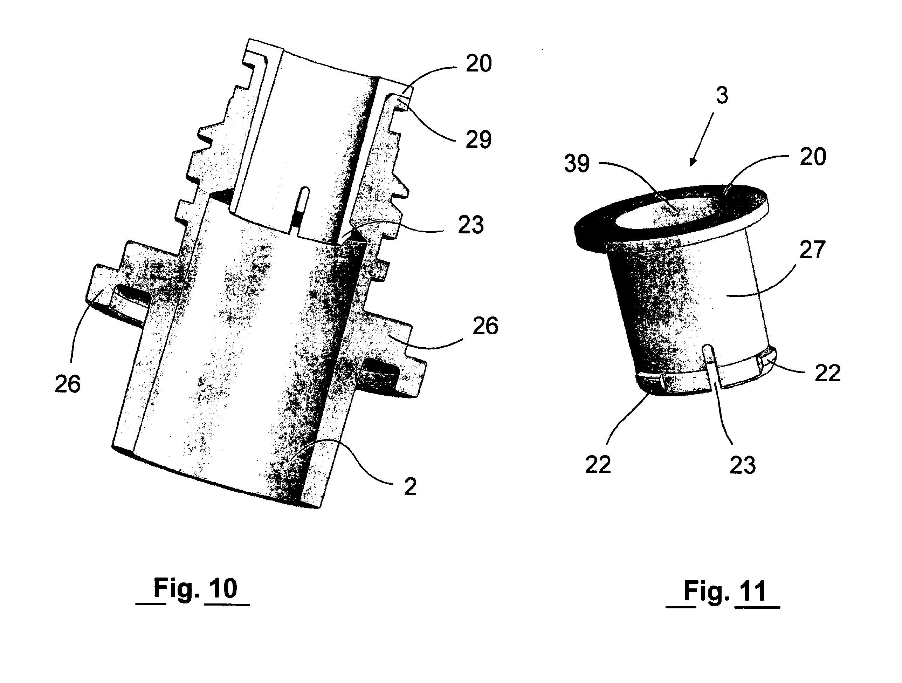

Wie die Fig. 10 und 11 zeigen, kann das Stutzendeckelelement 20 eine einzige große zentrale Ausnehmung 39 aufweisen. Die übrigen Bestandteile des Einfüllstutzens 3 bleiben bestehen. In diese zentrale Ausnehmung 39 kann ein zentraler Sensor eingebracht bzw. ein Anschlussschlauch oder dgl. angeschlossen werden. Auch kann das Stutzendeckelelement 20 ohne jegliche Ausnehmung ausgeführt werden. In diesem Fall kann der Stutzen 3 als Verschlussstutzen zum dichten Schließen des Tanks 1 eingesetzt werden.

Das Stutzendeckelelement 20 des Einfüllstutzens 2 gemäß Fig. 6 und 7 weist eine Drucksensorausnehmung 18 und eine Füllstandssensorausnehmung 19 sowie ein Leitungsanschlusselement 16 auf.

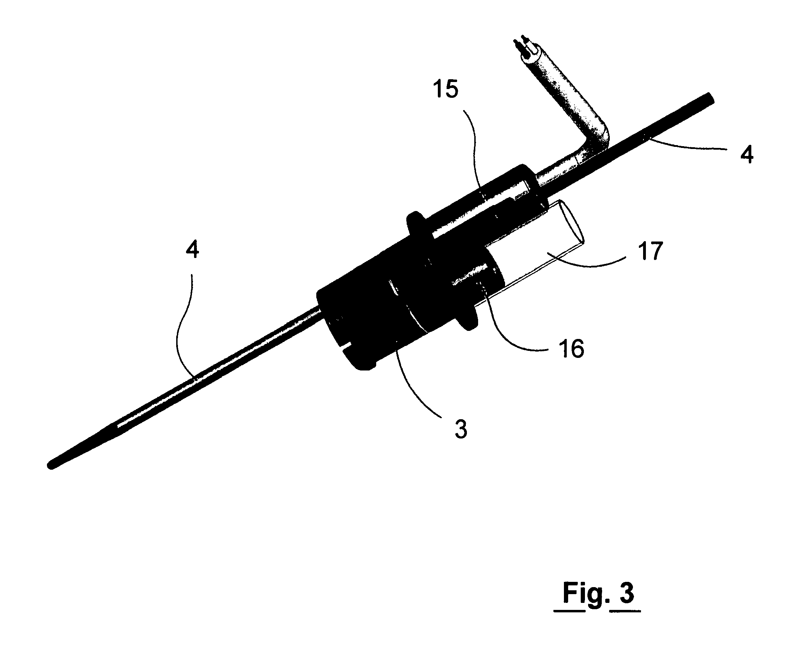

Wie insbesondere Fig. 3 zeigt, ist in die Ausnehmung 18 ein Drucksensor 15 und in die Ausnehmung 19 ein Füllstandssensor 4 eingebracht sowie auf das Anschlusselement ein Leitungsschlauch 17 aufgesteckt und besonders gesichert.

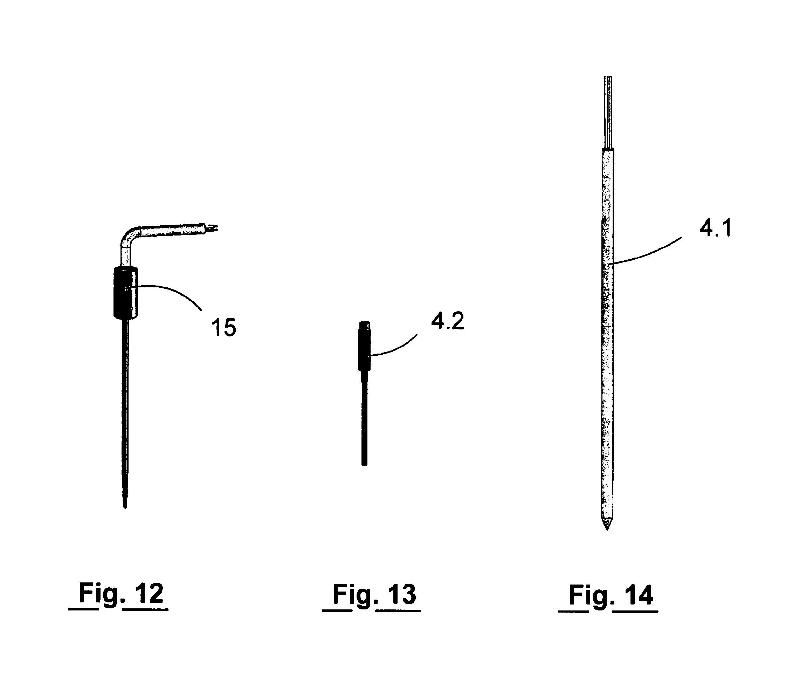

Der Drucksensor 15, der einzeln auch in Fig. 12 gezeigt ist, ist ein gegen Umwelteinflüsse beständiger Drucksensor. Die Hysteresegrenze dieses Sensors kann in allen Erkennungsmodi geändert werden. Der Sensor erkennt sowohl den höheren Druck als auch den niedrigeren Druck. Im Allzweckmodus kann der Druckerkennungspunkt an zwei gewünschten Punkten festgelegt werden. Differenzdruck ist der höhere bzw. niedrigere Druck gegen über dem Normaldruck. Diese und der Wechsel in noch weitere Modi machen diesen Sensor besonders geeignet für das sensible Befüllungsmanagement des Tanks 1 mit Harnstoff-Lösung 6.

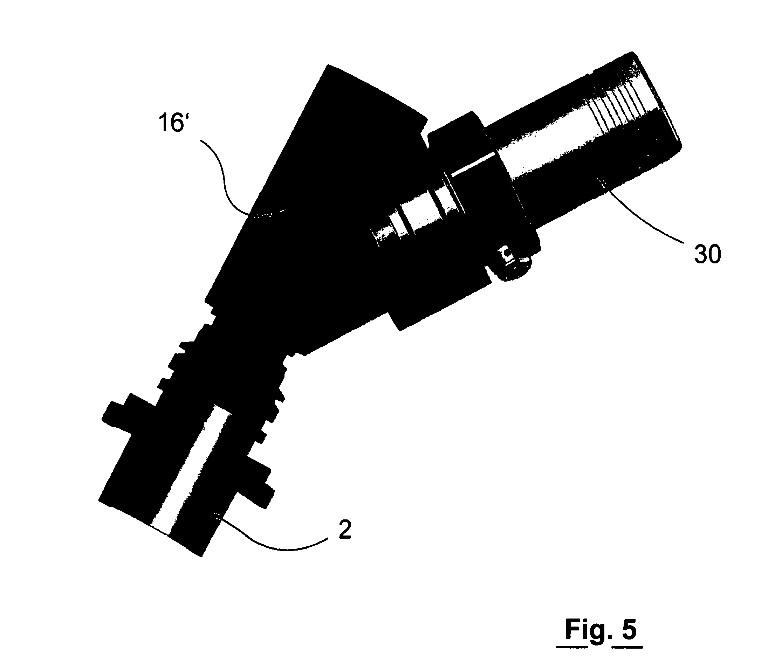

Wie die Fig. 4 und 5 zeigen, kann auch ein herkömmlicher Drucksensor 30 eingesetzt werden. Der Einfüllstutzen 2 müsste dann durch eine Zusatzmaßnahme wie Fig. 5 zeigt, ergänzt werden. Es wird dann ein längeres Leitungsanschlusselement 16 ausgebildet. Die übrigen Verriegelungselemente 22, 22.1, 23 und Dichtungselemente 24, 38 können beibehalten werden.

Der eingesetzte Füllstandssensor 4 ist zweiteilig ausgebildet und in den Figuren 13 und 14 einzeln dargestellt. Das längere Teil 4.1 gemäß Fig. 14 ragt in den Tank 1 hinein, das Teil 4.2 ist das aus dem Einfüllstutzen 3 herauszeigende Teil des Füllstandssensors 4. Eingesetzt wird ein digitaler Lichtleitersensor. Empfangen wird das reflektierte Licht. Für den Sensor wurde eine spezielle CPU-Technologie entwickelt, die die Steuerung mehrerer Funktionen ermöglicht:
- Extrem schnelle Berechnung der empfangenen Lichtintensität;
- Einstellung des Sollwertes in Echtzeit und duales Display.
Alle Informationen werden parallel verarbeitet. Hierdurch wird eine höhere Leistung und Geschwindigkeit erzielt.

Gemessen werden z. B. eine Füllstandshöhe 7 der im Tank 1 befindlichen Harnstoff-Lösung 6 (vgl. Fig. 1) bzw. eine maximale Füllstandshöhe hmax und eine Höchstfüllstandshöhe 8 hmax - Δh mit Hilfe des Füllstandssensors 4, die in Echtzeit als duale Werte angezeigt und als digitale Werte weiter verarbeitet werden können.

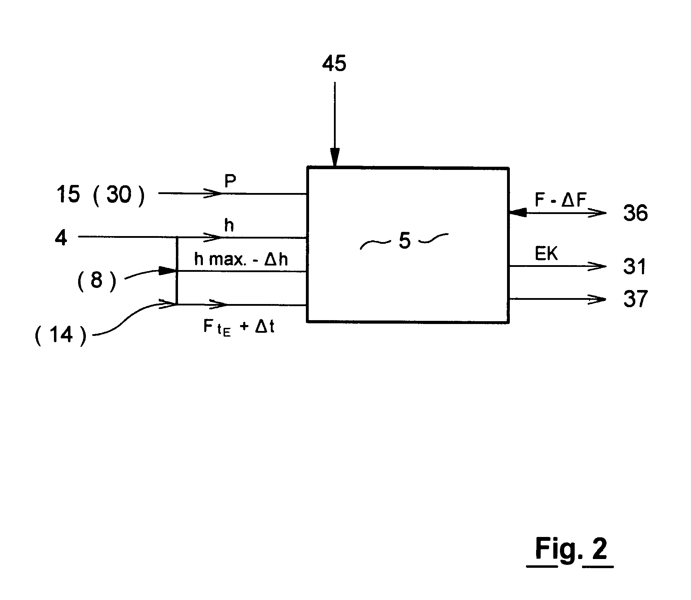

Der Höhenstandssensor 4 und der Füllstandssensor 15 bzw. 30 sind gemäß Fig. 2 an eine Rechnereinheit 5 angeschlossen. Die Rechner 5 kann ein Mikrorechner sein, der mit den Mikrorechnern beider Sensoren 4 und 15 in einem Mehrrechnerverbund zusammen arbeitet. An die Rechnereinheit 5 sind weiterhin eine Verriegelungseinheit 31, ein Zuflussregelelement 36, ein Rückflusselement 37 und ein Durchflusssensor 45 angeschlossen.

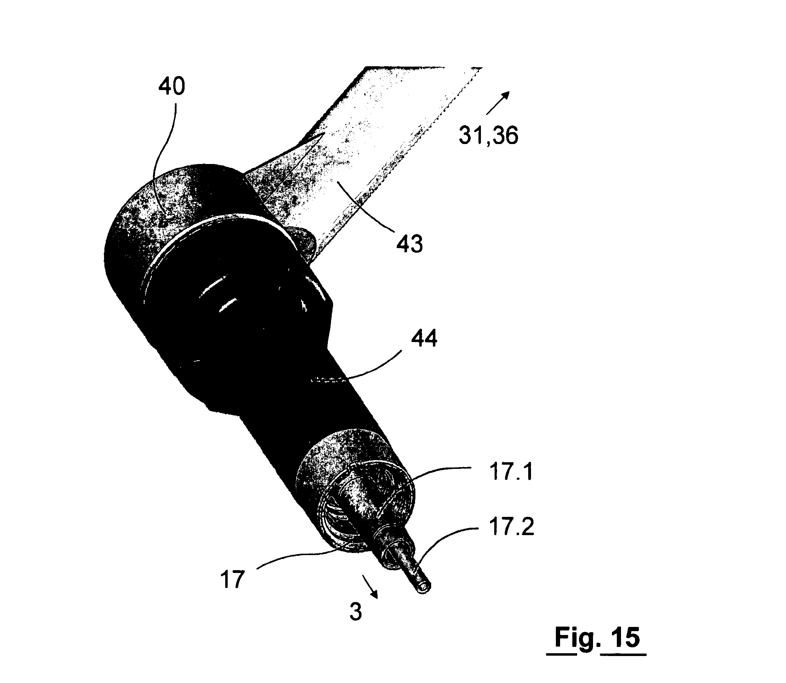

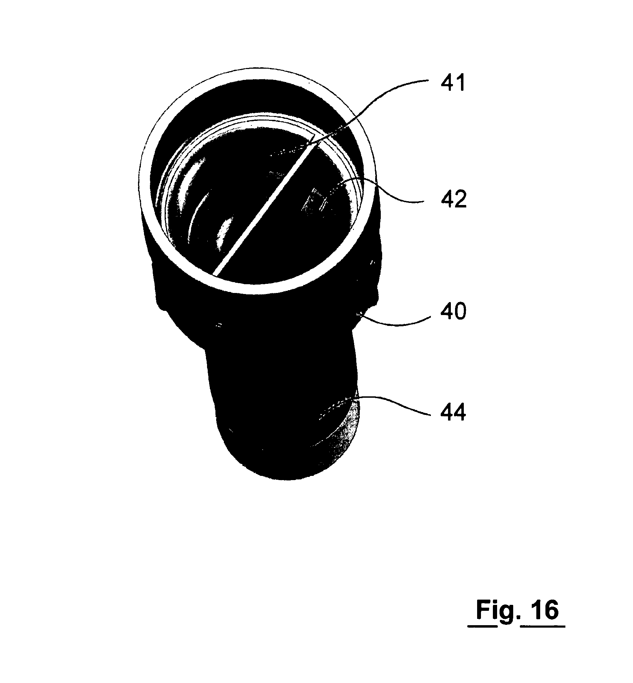

Wie die Figuren 15 und 16 zeigen, sind ein Kammerelement 40, ein Halteelement 43 und ein Gehäuseelement 44 vorgesehen. Das Kammerelement 40 ist in eine Füllkammer 41 und eine Entlüftungskammer 42 unterteilt. In dem Gehäuseelement ist das Leitungselement 17, bestehend aus einem Füllschlauch 17.1 und einem Entlüftungsschlauch 17.2., angeordnet. Der Entlüftungsschlauch wird im Füllschlauch geführt. Beide Schläuche können auch getrennt geführt werden.

Die beiden Schläuche können auch als steife Rohre ausgeführt werden. Die beiden Rohre 17.1, 17.2 lassen sich durch ein Adapterstück (nicht dargestellt) verlängern. Das Adapterstück kann in unterschiedlichen Längen ausgeführt werden. Es können auch mehrere Adapterstücke miteinander verbunden werden. Das jeweilige Adapterstück lässt sich durch Bajonettverschlüsse, Gewinde oder dgl. befestigen.

Außerdem kann eine rohrförmige Befüllkammer oder ein entsprechend geformter Schlauch zum Einsatz kommen, die sternförmig geformte Stützrippen für die Abluftkammer bzw. den Abluftschlauch aufweisen.

Die rohrförmige Befüllkammer lässt sich durch ein Adapterstück (nicht dargestellt) verlängern. Das Adapterstück kann in unterschiedlichen Längen ausgeführt werden. Es können auch mehrere Adapterstücke miteinander verbunden werden. Das jeweilige Adapterstück lässt sich durch Bajonettverschlüsse, Gewinde oder dgl. befestigen.

Am Kammerelement 40 sind eine Multifunktions- und/oder Zustandsanzeige und ein Notausschaltelement angeordnet.

Der Anschluss und die Arbeitsweise der Befüllvorrichtung 100, wie sie sich aus dem dargestellten Ausführungsbeispiel ergibt, seien erläutert:

Der Einfüllstutzen 3 mit dem Füllstands- und dem Drucksensor 15 sowie Leitungsanschlusselement 16 mit verbundenem Leitungsschlauch 17 wird in den Tankstutzen 2 eingeführt. Die Verriegelungsschrägen 22.1 der Verriegelungselemente 22 drücken den Einfüllstutzenhohlzylinder 21 durch Vorhandensein der Klemmschlitze 23 wenigstens teilweise zusammen. Ist der Einfüllstutzenhohlzylinder 21 vollständig in den Kupplungshohlzylinder 35 des Tankstutzens 2 eingeführt, setzt das Stutzenringelement 20 auf das Einfüllstutzenabschlussringelement 29 auf und die freigegebenen Verriegelungselemente fassen unter die Kupplungsabschlusselemente 34. Der Einfüll-und der Tankstutzen sind miteinander mechanisch verbunden. Das in der Ringausnehmung 38 befindliche Ringdichtungselement 24 wird an die Innenwandung des Kupplungshohlzylinders 35 gepresst und verbindet Einfüll- und Tankstutzen 2, 3 flüssigkeitsdicht.

Die Funktion der Befüllung des Tanks 1 mit Harnstoff-Lösung 6 geschieht wie folgt:

Der Drucksensor 15 erfasst ständig beim Befüllvorgang den im Tank herrschenden Druck P und vergleicht diesen mit einem an einem Ort herrschenden Normaldruck, z.B. von 760 mbar. Sobald P > 100 mbar ist, wird durch die Rechnereinheit 5 das Zuflussregelelement angesprochen und der Fluß F wird um den Teilfluß ΔF so reduziert, das der Innendruck wieder bei Normaldruck liegt. Ist P < 100 mbar wird der Zufluss so erhöht, dass sich der Normaldruck ebenfalls einstellt. Das Gleiche kann durch eine Regelung der Abluft in analoger Weise erfolgen.

Die errechnete und geregelte Beziehung F ± ΔF, entspricht Normaldruck P ± 100 mbar, sichert, dass die Seitenwände und vor allem der Tankboden 10 nicht verformt und die auf ihm befindlichen Sensoreinheiten 9 nicht beschädigt werden.

Die Trennung des Leitungselements 17 in Füll- und Entlüftungsschlauch 17.1, 17.2 sorgt für einen wirksamen Druckausgleich zwischen Tank 1 und Hauptspeicherbehälter. Vor allem kann die beim Befüllen aus dem Tank 1 gepresste Luft so abgeführt werden, dass sich hieraus keine ständigen Befüllunterbrechungen wegen Innendrucküberschreitung bzw. Tankverformungen aufgrund einer Innendrucküberschreitung ergeben.

Mit dem Durchflusssensor 45 wird ein möglicher Einbruch von Flüssigkeit in den Entlüftungsschlauch 17.2 bzw. die Entlüftungskammer 42 erfasst und derart ein Signal an die Rechnereinheit 5 weitergegeben, dass das Zuflussregelelement 36 eine Notfunktion auslöst. Als Notfunktion sind ein Ausschalten und/oder eine Zurückpumpfunktion vorgesehen.

Diese Notfunktion lässt sich auch durch das am Kammerelement 40 angebrachte Notausschaltelement auslösen. Hierdurch wird die von der Rechnereinheit auslösbare Notfunktion sinnvoll durch die vom Bedienenden auslösbare ergänzt.

Der Höhenstandssensor 15 erfasst ständig die jeweilige Füllstandshöhe h und gibt die gewünschte Füllstandshöhe 7 als Anzeige wieder. Soll nur eine bestimmte Menge an Harnstoff-Lösung 6 in den Tank 1 gefüllt werden, steuert die Rechnereinheit das Zuflussregelungselement 36 an und der Zufluss wird unterbrochen.

Soll der Tank vollständig bis zum Höchstfüllstand 8 befüllt werden, wird die maximale Füllstandshöhe hmax erreicht, d. h. die Zuflussmenge F der Harnstoff-Lösung 6 füllt den Tank 6 bis unterhalb Tankdecke 13 aus. Um auch hier eine Verformung und ein Heraustropfen von Harnstoff-Lösung bei Erwärmung zu verhindern, wird nach der Beziehung hmax - Δh der Flüssigkeitsspiegel auf den Höchstfüllstand 8 = F - ΔF abgesenkt. Das Rückflusselement 37 wird derart angesteuert, dass ca. 1 ltr. Harnstoff-Lösung als Teilfluss ΔF abgepumpt und so die Teilfüllstandshöhe Δh erreicht wird. Gemessen am Gesamtinhalt kann die abzupumpende Teilmenge mit einer anderen Menge als 1 ltr. festgelegt werden. Gesichert werden muss aber, dass der Höchstfüllstand 8 in einem Abstand unterhalb der Tankdecke 13 liegt.
Die am Kammerelement 40 angeordnete Multifunktions- und/oder Zustandsanzeige gibt Auskunft über alle Handlungen und Zustände beim Befüllungsvorgang.

Ist der Befüllungsvorgang beendet, wird dass Zuflussregelelement 36, das als elektrisch anzusteuerndes Ventil ausgebildet sein kann, geschlossen. Durch die Rechnereinheit 4 wird die Verriegelungseinheit 31 angesteuert, die ein Herausziehen des Einfüllstutzens erst nach einer Abtropfzeit Δt von ca. 30 bis 180 sec. erlaubt. Die Verriegelungseinheit 31 kann als mechanische Sperreinheit und/oder akustisch und/oder optische Warneinheit ausgebildet sein.

Die Abtropfzeit kann durch ein Potentiometer, einen elektrischen Kontakt, eine Zeitschaltung oder dgl. ermittelt werden.

Erst wenn die Abtropfzeit Δt vergangen ist, wird der Einfüll- aus dem Tankstutzen herausgezogen, indem die Verriegelungselemente 22 an dem schräg gestellten Kupplungsabschlusselement 34 (vgl. Insbesondere Fig. 7) vorbei gleiten und bedingt durch die Klemmschlitze 23 den Einfüllstutzenhohlzylinder 21 teilweise zusammendrücken. Der Einfüllstutzen gleitet samt seinem Ringdichtungselement 24 aus dem Tankstutzen 2 heraus und ist für weitere Befüllungsvorgänge bereit.

Über die Katalysatorleitung 32' kann nun Harnstoff-Lösung 6 in geforderter Menge dem Katalysator 32 für das SCRi-System zugeführt werden.

Zusammenfassend ist festzustellen, dass für das neue SCRi-System, das vorrangig Kohlenwasserstoffe und Kohlenmonoxid beseitigt und wenigstens etwa 60% bis 90% der Feinpartikel eliminiert
- ein zusätzlicher Tank mit einem Tankstutzen und mit einer speziellen Befüllvor- richtung mit wenigstens
- einem Befüllstutzen, ergänzt durch
- einen Drucksensor,
- einen Höhenstandssensor
- eine Verriegelungseinheit,
- einen Durchflusssensor
- einen Füll- und Entlüftungsschlauch und
- eine den Befüllvorgang steuernde Steuer- als Rechnereinheit
für eine Befüllung mit Harnstoff-Lösung als zusätzliche Flüssigkeit geschaffen wurde, wobei vorrangig Sicherheitsmaßnahmen für den Umgang mit dieser neuen Flüssigkeit die Ausgestaltung der neuen Befüllvorrichtung bestimmen.

Ergänzend wird darauf hingewiesen, dass im Inneren des Befüllstutzens oder Füllschlauch oder ein Ventilelement, erforderlichenfalls auch auswechselbar, angeordnet sein kann. Um den Tankpistolenzylinderhohlkörper kann mindestens ein Spritzschutzlabyrinthelement angeordnet werden. Lüftungsbohrungen können im Spritzschutzlabyrinthelement angeordnet sein.

## Patentansprüche

1. Vorrichtung zum Befüllen eines Behältnisses (1) mit einer Flüssigkeit, insbesondere Harnstoff-Lösung (6), bei der wenigstens ein Tankstutzen (2) über einer Tanköffnung (33) angeordnet ist, **dadurch gekennzeichnet,**
- **dass** mit dem Tankstutzen (2) ein Einfüllstutzen (3) zu verbinden ist und
- **dass** am Einfüllstutzen (3) wenigstens ein Leitungsschlauch (17) und ein wenigstens ein Sensorelement (4, 15, 30) angeordnet sind.

2. Vorrichtung zum Befüllen eines Behältnisses (1) mit einer Flüssigkeit, insbesondere Harnstoff-Lösung (6),
bei dem wenigstens ein Tankstutzen (2) über einer Tanköffnung (33) angeordnet ist, **dadurch gekennzeichnet,**
- **dass** mit dem Tankstutzen (2) ein Einfüllstutzen (3) zu verbinden ist und
- **dass** am Einfüllstutzen (3) wenigstens ein Leitungsschlauch (17) angeordnet ist.

3. Vorrichtung nach Anspruch 2, **dadurch gekennzeichnet, dass** am Einfüllstutzen (3) mit dem Leitungsschlauch (17) wenigstens ein Sensorelement (4, 15, 30) angeordnet sind.

4. Vorrichtung nach Anspruch 1 oder 2 oder 3, **dadurch gekennzeichnet, dass** als Sensorelemente wenigstens ein Füllstandsensor (4) und ein Drucksensor (15, 30) vorgesehen sind.

5. Vorrichtung nach einem der Ansprüche 1 bis 4, **dadurch gekennzeichnet, dass** als weiteres Sensorelement ein Durchflusssensor (45) vorgesehen ist.

6. Vorrichtung zum Befüllen eines Tankes (1) mit einer Flüssigkeit, insbesondere Harnstoff-Lösung (6), bei dem wenigstens ein Tankstutzen (2) über einer Tanköffnung (33) angeordnet ist, **dadurch gekennzeichnet,**
- **dass** mit dem Tankstutzen (2) ein Einfüllstutzen (3) zu verbinden ist und
- **dass** am Einfüllstutzen (3) wenigstens ein Leitungsanschlusselement (15), ein Füllstandssensor (4) und ein Drucksensor (15, 30) angeordnet sind,
- **dass** der Füllstandssensor (4), der Drucksensor (15, 30) und ein Zuflussregelungselement (36) und ein Durchflusssensor (45) mit einer Rechnereinheit (5) verbunden und in folgenden Schritten anzusteuern sind:
A) Erfassen der vom Füllstandssensor (4) gemessenen Füllstandshöhen (h);
B) Erfassen der vom Drucksensor (15, 30) gemessenen Drücke (P);
C) Erfassen der vom Durchflusssensor (45) gemessenen Durchflussmenge an Flüssigkeit (6);
D) Ansteuern des Zuflussregelungselements (36) derart, dass die zugeführte Flüssigkeit (6) einen Innendruck (P) und eine Füllstandshöhe (h) innerhalb voreingestellter Grenzen nicht überschreitet.

7. Vorrichtung nach Anspruch 6, **dadurch gekennzeichnet, dass**
E) das Zuflussregelungselement (36) eine vollständige Füllung des Tankes (1) so bemisst, dass eine maximale Füllstandshöhe (hmax) abzüglich einer Teilhöhe (Δh) eingestellt wird.

8. Vorrichtung nach Anspruch 6 oder 7, **dadurch gekennzeichnet,**
- **dass** eine Verriegelungseinheit (31) mit der Rechnereinheit verbunden ist und
- **dass** F) die Verriegelungseinheit (31) derart angesteuert wird, dass bei Beendigung des Flüssigkeitsflusses durch das Zuflussregelelement (36) der Einfüllstutzen (3) vom Tankstutzen (2) erst nach einer Abtropfzeit (Δt) zu lösen ist.

9. Vorrichtung nach einem der Ansprüche 6 bis 8, **dadurch gekennzeichnet,**
- **dass** der festgelegte Innendruck (P) ca. ± 100 mbar gegenüber dem atmosphärischen Normaldruck beträgt,
- **dass** mit einem Abpumpen von ca. 1 ltr. Flüssigkeit (6) die Teilhöhe (Δh) einzustellen ist,
- **dass** die Abtropfzeit (Δt) ca. 30 bis 180 sec. beträgt.

10. Vorrichtung nach einem der vorhergehenden Ansprüche, **dadurch gekennzeichnet, dass** die Verriegelungseinheit (31) kann als mechanische Sperreinheit und/oder akustisch und/oder optische Warneinheit ausgebildet ist.

11. Vorrichtung nach einem der vorhergehenden Ansprüche, **dadurch gekennzeichnet, dass** der Füllstandssensor (4) als Lichtleitersensor, PTC-Sensor, NTC-Sensor, kapazitiver Sensor, Hall-Sensor, Induktiver Sensor, Potentiometrischer Sensor oder dgl. Sensor ausgebildet ist.

12. Vorrichtung nach einem der vorhergehenden Ansprüche, **dadurch gekennzeichnet, dass** der als Lichtleitersensor ausgebildete Füllstandssensor (4) ein Reflexionssensor ist.

13. Vorrichtung nach einem der vorhergehenden Ansprüche, **dadurch gekennzeichnet, dass** der Füllstandssensor (4) ein aus einem in das Tank (1) ragenden Fühlerstab (4.1) und einem sich daran anschließenden aus dem Einfüllstutzen zeigenden Anschlussteil (4.2) besteht.

14. Vorrichtung nach einem der vorhergehenden Ansprüche, **dadurch gekennzeichnet, dass** der Drucksensor ein digitaler Drucksensor (15) mit einem hochauflösenden Modus ist.

15. Vorrichtung nach einem der vorhergehenden Ansprüche, **dadurch gekennzeichnet, dass** der Drucksensor ein analoger Drucksensor (30) ist.

16. Vorrichtung nach einem der vorhergehenden Ansprüche, **dadurch gekennzeichnet,**
- **dass** der Tankstutzen (2) einen Tankstutzenhohlzylinder (25) aufweist, der in einen Kupplungshohlzylinder (35) übergeht,
- **dass** der Kupplungshohlzylinder (35) zum Tankstutzenhohlzylinder hin ein umlaufendes Kupplungsabschlusselement (34) aufweist und
- **dass** am Tankstutzenhohlzylinder (25) ein Stutzenbefestigungselement (26) angeordnet ist.

17. Vorrichtung nach einem der vorhergehenden Ansprüche, **dadurch gekennzeichnet, dass** am Kupplungshohlzylinder (35) Rippenelemente (28) und ein Einfüllstutzenabschlussringelement (29) angeordnet sind.

18. Vorrichtung nach einem der vorhergehenden Ansprüche, **dadurch gekennzeichnet, dass** der Einfüllstutzen (3) einen Einfüllstutzenaufnahmehohlzylinder (27) mit wenigstens einem abschließenden Stutzenabschlusselement (20) aufweist.

19. Vorrichtung nach einem der vorhergehenden Ansprüche, **dadurch gekennzeichnet, dass** am Einfüllstutzenaufnahmehohlzylinder (27) des Einfüllstutzens (3) dem abschließenden Stutzenabschlusselement (20) gegenüber liegend wenigstens ein Verriegelungselement (22) angeordnet ist.

20. Vorrichtung nach einem der Ansprüche vorhergehenden Ansprüche, **dadurch gekennzeichnet, dass** das Verriegelungselement (22) zu verriegeln ist

21. Vorrichtung nach einem der vorhergehenden Ansprüche, **dadurch gekennzeichnet, dass** in den Einfüllstutzenaufnahmehohlzylinder (27) des Einfüllstutzens (3) dem abschließenden Stutzenabschlusselement (20) gegenüber liegend wenigstens ein Klemmschlitz (23) eingebracht ist.

22. Vorrichtung nach einem der vorhergehenden Ansprüche, **dadurch gekennzeichnet, dass** in den Einfüllstutzenaufnahmehohlzylinder (27) des Einfüllstutzens (3) eine Ringausnehmung (38) eingebracht ist.

23. Vorrichtung nach einem der vorhergehenden Ansprüche, **dadurch gekennzeichnet, dass** in die Ringausnehmung (38) ein Ringdichtungselement (24) einzulegen ist.

24. Vorrichtung nach einem der vorhergehenden Ansprüche, **dadurch gekennzeichnet, dass** der Leitungsschlauch (17) in den Tank (1) wenigstens teilweise geführt ist.

25. Vorrichtung nach einem der vorhergehenden Ansprüche, **dadurch gekennzeichnet, dass** der Leitungsschlauch (17) einen Füll - und einen Entlüftungsschlauch (17.1, 17.2) aufweist.

26. Vorrichtung nach einem der vorhergehenden Ansprüche, **dadurch gekennzeichnet, dass** ein Kammerelement (40) vorgesehen ist, die eine Füll - und eine Entlüftungskammer (41, 42) aufweist.

27. Vorrichtung nach einem der vorhergehenden Ansprüche, **dadurch gekennzeichnet, dass** mit dem Durchflusssensor (45) den Einbruch von Flüssigkeit in den Entlüftungsschlauch (17.2) bzw. die Entlüftungskammer (42) zu erfassen ist.

28. Vorrichtung nach einem der vorhergehenden Ansprüche, **dadurch gekennzeichnet, dass** mit dem vom Drucksensor erfassten Flüssigkeitseinbruch ein Signal an die Rechnereinheit (5) weitergegeben wird, dass das Zuflussregelelement (36) eine Notfunktion auslöst.

29. Vorrichtung nach Anspruch 28, **dadurch gekennzeichnet, dass** die Notfunktion ein Ausschalten und/oder eine Zurückpumpfunktion ist.

30. Vorrichtung nach einem der vorhergehenden Ansprüche, **dadurch gekennzeichnet, dass** der Tankstutzen (2), der Einfüllstutzen (3) und das Kammerelement (40) mit Füll - und Entlüftungskammer (41, 42) aus Kunststoff geformt sind.

31. Vorrichtung nach einem der vorhergehenden Ansprüche, **dadurch gekennzeichnet, dass** der Füll - und der Entlüftungsschlauch (17.1, 17.2) als Rohre ausgebildet und dass die Rohre durch ein Adapterstück zu verlängern sind.

32. Vorrichtung nach einem der vorhergehenden Ansprüche, **dadurch gekennzeichnet, dass** eine rohrförmige Füllkammer (41) bzw. ein entsprechend geformter Schlauch vorgesehen ist, die sternförmig geformte Stützrippen für die Abluftkammer bzw. den Abluftschlauch aufweisen.

33. Vorrichtung nach einem der vorhergehenden Ansprüche, **dadurch gekennzeichnet, dass** die rohrförmige Füllkammer (41) durch ein weiteres Adapterstück zu verlängern ist.

34. Vorrichtung nach einem der vorhergehenden Ansprüche, **dadurch gekennzeichnet, dass** am Kammerelement (40) eine Multifunktions- und/oder Zustandsanzeige angeordnet ist.

35. Vorrichtung nach einem der vorhergehenden Ansprüche, **dadurch gekennzeichnet, dass** am Kammerelement (40) ein Notausschaltelement angeordnet ist.

36. Vorrichtung nach einem der vorgehenden Ansprüche, **dadurch gekennzeichnet, dass** ein Ventilelement vorgesehen ist.

37. Vorrichtung nach einem der vorgehenden Ansprüche, **dadurch gekennzeichnet, dass** ein Ventilelement im Inneren des Befüllstutzens (3) und/oder im Füllschlauch (17.1) angeordnet ist.

38. Vorrichtung nach einem der vorgehenden Ansprüche, **dadurch gekennzeichnet, dass** das Ventilelement am Befüllstutzen (3) und/oder am Füllschlauch (17.1) auswechselbar ist.

39. Vorrichtung nach einem der vorgehenden Ansprüche, **dadurch gekennzeichnet, dass** um den Befüllstutzen (3) und/oder den Füllschlauch (17.1) mindestens ein Spritzschutzlabyrinthelement angeordnet ist, dass Lüftungsbohrungen aufweist.
